# EUROPÄISCHE PATENTSCHRIFT

(11) **EP 1 381 739 B1**
(45) Veröffentlichungstag und Bekanntmachung des Hinweises auf die Patenterteilung: **20.12.2006**
(21) Anmeldenummer: 02766611.4
(22) Anmeldetag: 30.03.2002
(51) Int. Cl.: E04B 2/76, F16B 7/04

(54) **T-VERBINDUNG ZWEIER PROFILSTÄBE**
T-LINK OF TWO PROFILED SECTIONS
ASSEMBLAGE EN T DE DEUX PROFILES

(30) Priorität: 26.04.2001 DE 20107168 U
(43) Veröffentlichungstag der Anmeldung: 21.01.2004
(73) Patentinhaber: Rixen, Wolfgang, Dipl.-Ing., 42699 Solingen (DE); Pies, Gerrit, 42699 Solingen (DE)
(72) Erfinder: Rixen, Wolfgang, Dipl.-Ing., 42699 Solingen (DE); Pies, Gerrit, 42699 Solingen (DE)
(74) Vertreter: Draudt, Axel Hermann Christian
(86) Internationale Anmeldenummer: PCT/EP2002/003586
(87) Internationale Veröffentlichungsnummer: WO 2002/088482

(56) Entgegenhaltungen:
- WO-A-00/34670
- US-A- 3 456 966

## Beschreibung

T-Verbindung zweier Profilstäbe, wobei die T-Verbindung aus zwei Profilstäben und einem Verbinder besteht, wobei der Verbinder zwei längliche, von einem Fixierelement quer verspannbare Klemmbacken aufweist, die in hinterschnittenen Mantelnuten eines zweiten der Profilstäbe zangenartig schließend verklemmbar sind, und die in einem Hohlraum eines ersten der Profilstäbe stirnseitig eingreifen sowie an zwischen ihnen angeordneten rohrparallelen Innenstegen des ersten Profilstabs festklemmbar sind, wobei der Profilstab mehr als zwei solcher über seinen Innenumfang gleichmäßig verteilte und einander diametral gegenüberliegende Innenstege aufweist, an denen die Klemmbacken längs linienförmig und/oder flächenförmig anliegend festklemmbar sind, wobei die Innenstege gegen in der Ebene der geklemmten Innenstege wirkende Spreizbelastung des ersten Profilstabs zusammengehalten werden können,

Eine T-Verbindung mit den vorgenannten Merkmalen ist aus der WO 00/34670 bekannt. Die Klemmbacken schließen an ihren Längskanten jeweils einen Innensteg zwischen sich ein. Die Klemmflächen der Klemmbacken und die Klemmflächen der Innenstege sind jeweils eben. Es findet damit eine rein kraftschlüssige Verbindung zwischen den Klemmbacken und den Innenstegen statt. Die dabei wirkende Klemmkraft ist von dem Fixierelement abhängig, mit dem die Klemmbacken verspannt werden. Zugleich dient das Fixierelement aber auch dazu, die Klemmbacken an hinterschnittenen Mantelnuten des zweiten Profilstabs zangenartig zu verklemmen. Daher ist es nicht auszuschließen, daß Toleranzen im Bereich des zweiten Profilstabs Auswirkungen auf die Klemmkraft der Klemmbacken am ersten Profilstab bzw. an dessen Innenstegen haben. Dementsprechend kann es hier zu unerwünschten Klemmkraftschwankungen kommen, so daß die Verbindungsstabilität entsprechend unterschiedlich ist. Außerdem können Belastungen der Profilstäbe dazuführen, daß die Innenstege von den Klemmbacken nicht genügend festgeklemmt werden, so daß sie sich bewegen und im Grenzfall aus den Klemmbacken herausrutschen, wenn die Verformung des Profilstabs genügend groß ist. Auch in diesem Fall wird die Verbindungsfestigkeit der T-Verbindung in unerwünschter Weise beeinflußt.

Demgegenüber liegt der Erfindung die Aufgabe zugrunde, eine T-Verbindung mit den eingangs genannten Merkmalen so auszubilden, daß die Verbindungsfestigkeit verbessert wird.

Die vorgenannte Aufgabe wird bei einer T-Verbindung der eingangs genannten Art erfindungsgemäß dadurch gelöst, daß die geklemmten Innenstege von den Klemmbacken formschlüssig zusammenzuhalten sind.

Für die Erfindung ist von Bedeutung, daß von der reinen Kraftschlüssigkeit der Verbindung zwischen den Klemmbacken und den Innenstegen abgewichen wird. Statt dessen sind die geklemmten Innenstege von den Klemmbacken formschlüssig zusammenzuhalten. Dabei liegt der Erfindung die Erkenntnis zugrunde, daß in den meisten Konstruktionsfällen Belastungen auftreten, die zu einer Verformung des ersten Profilstabs führen, bei denen die Innenstege tendenziell aus den Klemmbacken quer herausgezogen werden. Die Anwendung eines formschlüssigen Zusammenhalts der Innenstege führt demgemäß zu einer erheblichen Stabilisierung der T-Verbindung, auch wenn Belastungskomponenten vorhanden sind, die zu tendenziellen Verformungen des ersten Profilstabs senkrecht zu der von den geklemmten Innenstegen aufgespannten Ebene wirken.

Eine zweckmäßige Ausgestaltung der vorangesprochenen formschlüssigen Verbindung zwischen Innenstegen und Klemmbacken ist dadurch gekennzeichnet, daß die Innenstege und die Klemmbacken mittels steglängs durchlaufender Kupplungsrippen und Kupplungsrillen formschlüssig zusammenzuhalten sind und an den Klemmbacken die Kupplungsrippen ausgebildet sind, die in die Kupplungsrillen der Innenstege eingreifen. Die Ausbildung der Kupplungsmittel als Rippen und Rillen gewährleistet eine in deren Längsrichtung beliebige Positionierung für den Zusammenbau, so daß in diesen Richtungen vorhandene Toleranzen für den gewünschten festen Klemmsitz keine Rolle spielen. Die Klemmbacken können in gleicher Ausbildung für unterschiedliche Stabquerschnitte und vor allem auch für unterschiedliche Distanzen des ersten Profilstabs zum zweiten Profilstab verwendet werden, beispielsweise, um zwischen beiden Stäben Abdeckkappen anzuwenden. Die Kupplungsrippen können kantennah angeordnet werden, so daß die Klemmbacken entsprechend schmal gehalten werden können, was für kleine und dementsprechend beschränkte Querschnitte des ersten Profilstabs von Vorteil sein kann.

Eine vorteilhafte formschlüssige Verbindung zwischen dem Innensteg und den Klemmbacken ergibt sich, wenn die T-Verbindung so ausgebildet ist, daß eine Kupplungsrille eines Innensteges zwischen zwei längs durchlaufenden Stegrippen ausgebildet ist. In diesem Fall wird ein formschlüssiger Sitz in beiden Richtungen quer zu den Innenstegen gewährleistet. Es wird also eine Verformung des ersten Profilstabs in beiden Richtungen quer zu den Innenstegen verhindert. Die Stegrippen erlauben eine hohe Anordnung der Kupplungsrille bezüglich der Querschnittsmitte des Innenstegs und damit eine größere Stegstärke im Bereich der Kupplungsrille.

Es ist zu bevorzugen, daß der Innensteg im Bereich einer Kupplungsrille praktisch ebenso dick ist, wie in einem Ansatzbereich am Innenumfang des ersten Profilstabs. Dadurch wird für eine Stabilität des Innenstegs gesorgt, die im Bereich der Kupplungsrille praktisch ebenso groß ist, wie im Ansatzbereich des Innenstegs am Innenumfang des ersten Profilstabs.

Eine weitere Verbesserung des Zusammenhalts zwischen den Klemmbacken und den Innenstegen ergibt sich dadurch, daß die Innenstege beidseitig mit je einer Kupplungsrille und jede Klemmbacke beidseitig mit je einer Kupplungsrippe versehen sind. Durch die infolgedessen gegebene Verdoppelung der Kupplungsmittel wird erreicht, daß die spezifischen Beanspruchungen der Kupplungsmittel entsprechend gesenkt werden können. Es ist möglich, die für das formschlüssige Kuppeln benötigen Vor- und Rücksprünge der Kupplungsrippen bzw. Kupplungsrillen in ihrem Ausmaß zu reduzieren.

Für eine universelle Verwendbarkeit der Klemmbacken und der Profilstäbe ist es vorteilhaft, wenn alle Innenstege eines Profilstabs mit gleich großen Kupplungsrippen und Kupplungsrillen ausgebildet sind. Dadurch wird eine bei einem Zusammenbau häufig störende Vorzugspositionierung des Profilstabs vermieden.

Die T-Verbindung kann so ausgebildet werden, daß der erste Profilstab einen runden Querschnitt hat und die Innenstege in einem Ansatzbereich am Innenumfang des ersten Profilstabs einen bis zu einer Kupplungsrille reichenden Abstandsstegabschnitt aufweisen. Der Abstandsstegabschnitt berücksichtigt die Krümmung des Profilstabs dahingehend, daß die Klemmbacken in größerem Abstand von seinem Innenumfang angreifen können und deswegen mit ihren Längskanten nicht am Profilstab anstoßen.

Eine weitere spezielle T-Verbindung ist dadurch gekennzeichnet, daß der erste Profilstab einen quadratischen Querschnitt hat und am Innenumfang jeder Stabwand einen einzigen, mittig angeordneten Innensteg aufweist. Diese Ausgestaltung ermöglicht insbesondere bei kleineren quadratischen Querschnitten des Profilstabs die Ausbildung querschnittsstarker Klemmbacken. Im Extremfall kann der Querschnitt einer Klemmbacke den halben Querschnitt des Profilstabs einnehmen. Dabei ist lediglich auf das Vorhandensein des nicht zum Klemmen benutzten Innenstegs Rücksicht zu nehmen.

Die vorgenannte Ausführungsform der T-Verbindung ist für größere Belastungen insbesondere dadurch geeignet, daß der Innensteg von einer Kupplungsrille mit einem Versteifungswulst an den Innenumfang der Stabwand anschließt.

Die Erfindung wird anhand von in der Zeichnung dargestellten Ausführungsbeispielen erläutert. Es zeigt:
- Fig.1: einen Längsschnitt durch eine erste Ausführungsform einer T-Verbindung,
- Fig.2: einen Querschnitt durch den ersten Profilstab der T-Verbindung der Fig.1,
- Fig.3,4: den Figuren 1,2 entsprechende Darstellungen von T-Verbindungen zweier quadratischer Profilstäbe.

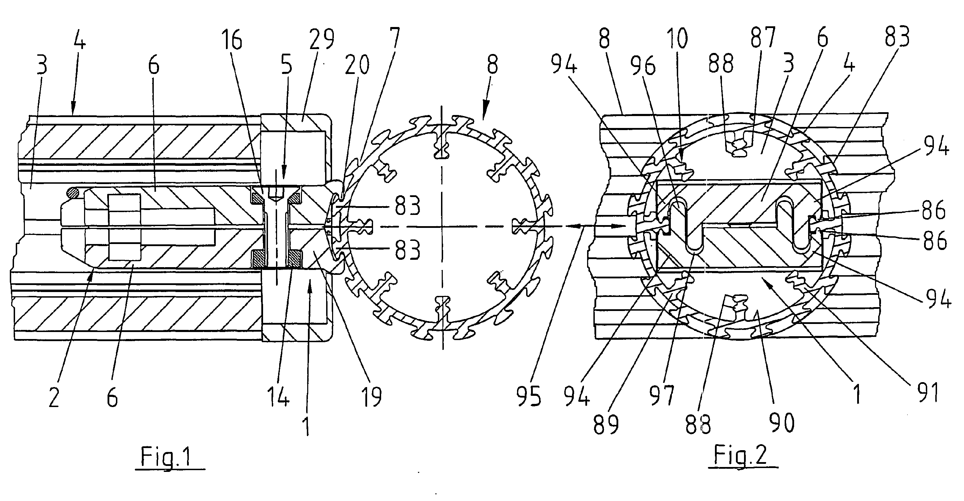

Die Figuren 1,2 zeigen eine Verbindung eines ersten Profilstabs 4 mit einem zweiten Profilstab 8 mittels eines Verbinders 1. Die Profilstäbe 4,8 sind rohrförmig und weisen einen im wesentlichen kreisförmigen Querschnitt auf. Der Außenumfang jedes Profilstabs 4,8 ist mit hinterschnittenen Mantelnuten 7 ausgebildet, so daß dementsprechend ausgebildete Außenstege 83 vorhanden sind. Diese Außenstege 83 und die sie bildenden Mantelnuten 7 sind an den Profilstäben 4,8 vorhanden, um sie mechanisch miteinander verbinden zu können.

Der Verbinder 1 besteht aus zwei Klemmbacken 6, die massiv ausgebildet sind. Die Klemmbacken 6 greifen mit Schenkelenden 20 von Zangenschenkeln 19 der Klemmbacken 6 am Profilstab 8 an. Dabei schließen die Schenkelenden 20 zwei Außenstege 83 des Profilstabs 8 zangenartig zwischen sich ein. Die dabei aufzuwendenen Spannkräfte werden von einem Fixierelement 5 aufgebracht.

Das Fixierelement 5 ist zwischen den Zangenschenkeln 19 und einem Einsteckende 2 des Verbinders 1 im Bereich zwischen dem Profilstab 4 und dem Profilstab 8 angeordnet, so daß es entsprechend zugänglich ist.

Das Fixierelement 5 weist eine Schraube auf, die in eine Schraubenmutter 14 eingeschraubt ist. Die Klemmbacken 6 werden zwischen dieser Schraubenmutter und einem Schraubenkopf 16 eingespannt und zusammengepreßt, so daß sich die Schenkelenden 20 in den Hinterschneidungen der Mantelnuten 7 an den Außenstegen 83 festsetzen. Sobald der Fixiervorgang abgeschlossen ist, kann die dem Profilstab 8 zugewendete Stirnseite des Profilstabs 4 mit einer Abdeckkappe 29 so verschlossen werden, daß die Zangenschenkel 19 der Klemmbacken 6 prakisch nicht mehr sichtbar sind und auch das Fixierelement 5 abgedeckt wird.

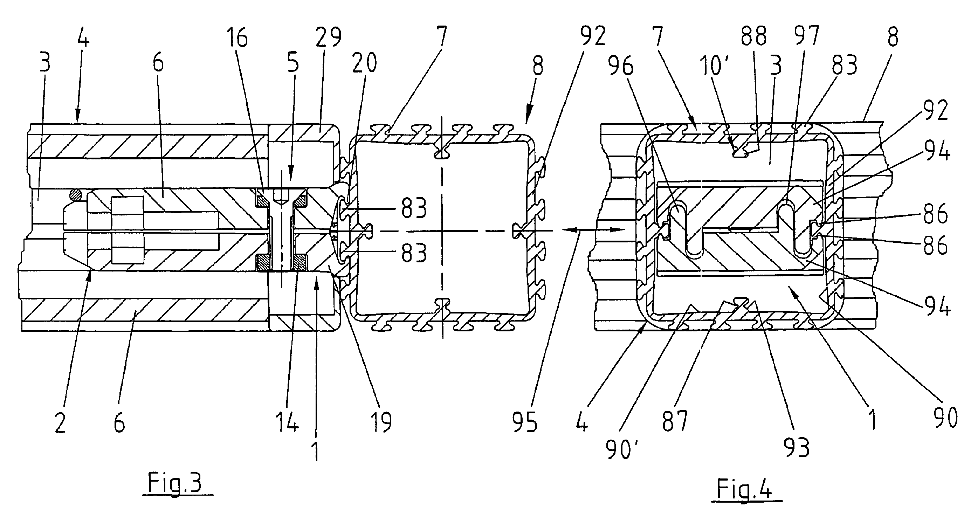

Bei einer Betätigung des Fixierelements 5 des Verbinders 1 muß letzterer auch mit dem Profilstab 4 derart in Verbindung gebracht werden, daß die T-Verbindung der beiden Profilstäbe 4,8 wirksam wird. Hierzu sind die Profilstäbe 4,8 und insbesondere der Profilstab 4 mit Innenstegen versehen, die in den Figuren 1,2 mit 10 und in den Figuren 3,4 mit 10' bezeichnet wurden, da ihr Querschnitt unterschiedlich ist. Gemeinsam ist ihnen jedoch, daß je zwei Innenstege 10 oder 10' einander diametral gegenüber angeordnet sind. Insbesondere damit wird es ermöglicht, daß zwei gleich ausgebildete Klemmbacken 6 angewendet werden können, um den Verbinder 1 an den Innenstegen 10,10' zu befestigen. Für eine solche Befestigung besitzen die Klemmbacken 6 Längskanten 94, so daß zwischen je zwei einander benachbarten Längskanten 94 zweier Klemmbacken 6 ein Innensteg 10 bzw. 10' eingeklemmt werden kann. Bei einer Betätigung des Fixierelements 5 im Sinne eines Zusammenspannens der Klemmbacken 6 stützen sich also die Längskanten 94 auf den Innenstegen 10,10' ab und klemmen diese fest zwischen sich ein. Dadurch wird erreicht, daß der Verbinder 1 nicht längs aus dem Profilstab 4 herausgezogen werden kann, wenn sich die Belastungen des Verbinders 1 im Rahmen der durch die Konstruktion vorgegebenen Bereiche halten.

Die T-Verbindung der beiden Profilstäbe 4,8 wird in Konstruktionen eingesetzt, bei denen Belastungen nicht nur in den Längsrichtungen der Stäbe auftreten. Es kommt vielmehr auch zu Querbelastungen, beispielsweise zu Biege- oder Torsionsbelastungen von aus Profilstäben aufgebauten Konstruktionen. Wird bespielsweise der Profilstab 4 in Fig.1 vertikal belastet, so wird sich der Profilstab 4 tendenziell oval verformen. Sein Querschnitt wäre nicht mehr gem. Fig.2 kreisrund sondern oval. Innenstege mit ebenen Klemmflächen können dann derart belastet werden, daß die kraftschlüssige Verbindung nicht mehr hält. Es käme zu einer Spreizung und damit zu einer entsprechenden Destabilisierung der T-Verbindung. Im Extremfall rutscht ein Innensteg aus seiner Klemmstellung zwischen zwei Längskanten 94 der Klemmbacken 6 heraus. Um das zu verhindern, sind die Innenstege 10,10' mit Kupplungsrillen 87 ausgebildet, die in Richtung der Innenstege 10,10' längs durchlaufen. Sie werden also bei der Herstellung der Profilstäbe 4,8 gleichzeitig hergestellt, nämlich durch Extrudieren. Ihr Herstellungsaufwand ist entsprechend gering.

Die Innenstege 10,10' sind wegen der Querschnittsgestaltung der Profilstäbe 4,8 im übrigen unterschiedlich ausgebildet. Die Innenstege 10 sind länger als die Innenstege 10'. Die Innenstege 10 greifen in einem Ansatzbereich 89 am Innenumfang 90 des ersten Profilstabs 4 mit einem Abstandsstegabschnitt 91 an. An den Abstandsstegabschnitt 91 schließen sich beidseitig je zwei Stegrippen 88 an, die zwischen sich je eine Kupplungsrille 87 aufweisen. Die Stegrippen 88 bedeuten eine Vergrößerung des Querschnitts und tragen damit auch zu einer Versteifung des Profilstabs 4,8 bei. Auf beiden Seiten des Innenstegs 10 sind jeweils zwei Stegrippen 88 mit einer zwischen ihnen ausgebildeten Kupplungsrille 87 vorhanden. In jede Kupplungsrille 87 greift eine Kupplungsrippe 86 einer Klemmbacke 6 ein, so daß jede Klemmbacke 6 mit jeder Längskante 94 formschlüssig an einem Innensteg 10 angreift, nämlich formschlüssig gegen Spreizbelastungen, die in der Ebene der von den Klemmbacken 6 erfaßten Innenstege 10 wirken. Die Hauptrichtungen dieser Spreizbelastungen im Biegefall des Profilstabs 4 sind in Fig.2 mit dem Doppelpfeil 95 gekennzeichnet. Es sind also diejenigen Richtungen, in denen die Innenstege 10 mit ihren Querschnitten gemäß Fig.2 weisen.

Infolge der beidseitig der Kupplungsrille 87 vorhandenen Stegrippen 88 ist Formschluß in beiden Richtungen 95 gegeben. Aus Stabilitätsgründen ist bei der Formgebung des Querschnitts der Innenstege 10 darauf geachtet worden, daß der Innensteg 10 im Bereich der beiden einander gegenüberliegenden Kupplungsrillen 87 praktisch ebenso dick ist, wie in einem Ansatzbereich 89 am Innenumfang 90 des ersten Profilstabs 4 bzw. wie der Abstandsstegsabschnitt 91.

Bei der Ausbildung der Innenstege 10' gem. Fig.3,4 kann auf einen Abstandsstegabschnitt 91 verzichtet werden. Infolgedessen können die Kupplungsrillen 87 sehr dicht am Innenumfang 90' des Profilstabs 4 angeordnet werden. Von den Kupplungsrillen 87 erfolgt ein Übergang mittels eines Versteifungswulstes 93 in den Innenumfang 90'.

Dementsprechend ist auch nur eine einzige längs durchlaufende Stegrippe 88 auf jeder Seite des Innenstegs 10' ausgebildet. Auch hier ist der Abstand zwischen den beiden Kupplungsrillen 87 derart, daß die Festigkeit des Innenstegs 10' gegen Zugbelastungen ausreicht, die in den Richtungen 95 wirken.

Der Profilstab 4,8 der Fig.4,3 ist außerdem noch insofern von besonderer Ausgestaltung, als an jeder Stabwand 92 nur ein einziger Innensteg 10' ausgebildet ist. Die vier Innenstege 10' des quadratischen Profilstabs 4,8 sind jeweils mittig angeordnet. Dementsprechend kann der Verbinder 1 nur in der in Fig.4 dargestellten Stellung in den Profilstab 4 eingesetzt und befestigt werden, oder um 90° gedreht. In keinem Fall besteht die Gefahr, daß die Klemmbacken 6 von den Stabwänden 92 behindert werden könnten, wie es in Fig.2 der Fall wäre, wenn dort die Innenstege 10 nicht Abstandsstegabschnitte 91 aufweisen würden oder entsprechend länger wären. Im Fall der kreisrunden Querschnitte der Profilstäbe 4,8 ist es jedoch sinnvoll, daß die Klemmbacken 6 mit Längskanten jeweils in einen Zwischenraum eingreifen, der zwischen dem festgeklemmten Innensteg und dem benachbart gelegenen Innensteg ausgebildet ist. Die Klemmbacken 6 können dann entsprechend stabiler ausgebildet werden, was zu einer verbesserten Abstützung der Kupplungsrippen 86 bzw. der Längskante 94 der Klemmbacken 6 führt.

Die Klemmbacken 6 sind gem. Fig.2,4 parallel zu den Kupplungsrippen 86 formschlüssig miteinander verbunden, und zwar in den Richtungen 95. Dieser Formschluß wird von wechselweise angeordneten Vorsprüngen 96 und Rücksprüngen 97 bewirkt, die mit sehr großen Querschnitten ausgebildet sind, so daß sich eine entsprechende Stabilisierung des gegenseitigen Eingriffs der Klemmbacken 6 zwischen den Stegen 10,10' ergibt, was im Hinblick auf die abzutragenden Belastungen von Vorteil ist.

## Patentansprüche

1. T-Verbindung zweier Profilstäbe, wobei die T-Verbindung aus zwei Profilstäben (4, 8) und einem verbinder (1) besteht, wobei der Verbinder (1) zwei längliche, von einem Fixierelement (5) quer verspannbare Klemmbacken (6) aufweist, die in hinterschnittenen Mantelnuten (7) eines zweiten (8) der Profilstäbe zangenartig schließend verklemmbar sind, und die in einem Hohlraum (3) eines ersten (4) der Profilstäbe stirnseitig eingreifen sowie an zwischen ihnen angeordneten rohrparallelen Innenstegen (10,10') des ersten Profilstabs (4) festklemmbar sind, wobei der erste Profilstab (4) mehr als zwei solcher über seinen Innenumfang gleichmäßig verteilte und einander diametral gegenüberliegende Innenstege (10,10') aufweist, an denen die Klemmbacken (6) längs linienförmig und/oder flächenförmig anliegend festklemmbar sind, wobei die Innenstege (10,10') gegen in der Ebene der geklemmten Innenstege (10,10') wirkende Spreizbelastung des ersten Profilstabs (4) zusammengehalten werden können, **dadurch gekennzeichnet, daß** die geklemmten Innenstege (10,10') von den Klemmbacken (6) formschlüssig zusammengehalten werden können.

2. T-Verbindung nach Anspruch 1, **dadurch gekennzeichnet, daß** die Innenstege (10,10') und die Klemmbacken (6) mittels steglängs durchlaufender Kupplungsrippen (86) und Kupplungsrillen (87) formschlüssig zusammenzuhalten sind und an den Klemmbacken (6) die Kupplungsrippen (86) ausgebildet sind, die in die Kupplungsrillen (87) der Innenstege (10,10') eingreifen.

3. T-Verbindung nach Anspruch 2, **dadurch gekennzeichnet, daß** eine Kupplungsrille (87) eines Innensteges (10) zwischen zwei längs durchlaufenden Stegrippen (88) ausgebildet ist.

4. T-Verbindung nach Anspruch 2 oder 3, **dadurch gekennzeichnet, daß** der Innensteg (10) im Bereich einer Kupplungsrille (87) praktisch ebenso dick ist, wie in einem Ansatzbereich (89) am Innenumfang (90) des ersten Profilstabs (4).

5. T-Verbindung nach einem der Ansprüche 1 bis 4, **dadurch gekennzeichnet, daß** die Innenstege (10,10') beidseitig mit je einer Kupplungsrille (87) und jede Klemmbacke (6) beidseitig mit je einer Kupplungsrippe (86) versehen sind.

6. T-Verbindung nach einem der Ansprüche 1 bis 5, **dadurch gekennzeichnet, daß** alle Innenstege (10,10') eines Profilstabs (4) mit gleich großen Kupplungsrippen (86) und Kupplungsrillen (87) ausgebildet sind.

7. T-Verbindung nach einem der Ansprüche 1 bis 6, **dadurch gekennzeichnet, daß** der erste Profilstab (4) einen runden Querschnitt hat und die Innenstege (10) in einem Ansatzbereich (89) am Innenumfang (90) des ersten Profilstabs (4) einen bis zu einer Kupplungsrille (87) reichenden Abstandsstegabschnitt (91) aufweisen.

8. T-Verbindung nach einem der Ansprüche 1 bis 6, **dadurch gekennzeichnet, daß** der erste Profilstab (4) einen quadratischen Querschnitt hat und am Innenumfang (90') jeder Stabwand (92) einen einzigen, mittig angeordneten Innensteg (10') aufweist.

9. T-Verbindung nach Anspruch 8, **dadurch gekennzeichnet, daß** der Innensteg (10') von einer Kupplungsrille (87) mit einem Versteifungswulst (93) an den Innenumfang (90') der Stabwand (92) anschließt.

## Claims

1. T-connection of two profiled bars, wherein the T-connection consists of two profiled bars (4, 8) and a connector (1), wherein the connector (1) comprises two longitudinal clamping jaws (6) which can be braced in a transverse manner by a fixing element (5) and can be clamped in a locking manner into undercut peripheral grooves (7) of a second one (8) of the profiled bars in a pincer-like manner and engage in a hollow space (3) of a first one (4) of the profile bars at the end side and can be fixedly clamped on inner webs (10, 10') of the first profiled bar (4) which webs are disposed therebetween and extend in a tube-parallel manner, wherein the first profiled bar (4) comprises more than two such inner webs (10, 10') distributed evenly around its inner periphery and disposed diametrically opposite one another, the clamping jaws (6) can be fixedly clamped adjacent to the inner webs in a longitudinal linear and/or planiform manner, wherein the inner webs (10, 10') can be held together against a spreading load of the first profiled bar (4) acting in the plane of the clamped inner webs (10, 10'), **characterised in that** the clamped inner webs (10, 10') can be held together by the clamping jaws (6) in a positive-locking manner.

2. T-connection as claimed in Claim 1, **characterised in that** the inner webs (10, 10') and the clamping jaws (6) are to be held together in a positive-locking manner by means of coupling ribs (86) and coupling grooves (87) extending along the webs, and the coupling ribs (86) are formed on the clamping jaws (6) and engage into the coupling grooves (87) of the inner webs (10, 10').

3. T-connection as claimed in Claim 2, **characterised in that** a coupling groove (87) of an inner web (10) is formed between two longitudinally extending web ribs (88).

4. T-connection as claimed in Claim 2 or 3, **characterised in that** the inner web (10) in the region of a coupling groove (87) is practically the same thickness as in a shoulder region (89) on the inner periphery (90) of the first profiled bar (4).

5. T-connection as claimed in any one of Claims 1 to 4, **characterised in that** the inner webs (10, 10') are each provided with a coupling groove (87) on both sides and each clamping jaw (6) is provided with a coupling rib (86) on both sides.

6. T-connection as claimed in any one of Claims 1 to 5, **characterised in that** all of the inner webs (10, 10') of a profiled bar (4) are formed with coupling ribs (86) and coupling grooves (87) of the same size.

7. T-connection as claimed in any one of Claims 1 to 6, **characterised in that** the first profiled bar (4) has a circular cross-section and the inner webs (10) comprise in a shoulder region (89) on the inner periphery (90) of the first profiled bar (4) a spacer web portion (91) extending as far as a coupling groove (87).

8. T-connection as claimed in any one of Claims 1 to 6, **characterised in that** the first profiled bar (4) has a quadratic cross-section and on the inner periphery (90') each bar wall (92) comprises a single inner web (10') disposed in the centre.

9. T-connection as claimed in Claim 8, **characterised in that** the inner web (10') adjoins the inner periphery (90') of the bar wall (92) from a coupling groove (87) by way of a reinforcing bead (93).

## Revendications

1. Assemblage en T de deux profilés, l'assemblage en T se composant de deux profilés (4, 8) et d'un élément de liaison (1), l'élément de liaison (1) comportant deux mâchoires (6) de forme allongée qui sont aptes à être serrées transversalement par un élément de fixation (5), qui sont aptes à être bloquées dans le sens d'une fermeture, à la manière d'une pince, dans des rainures périphériques contre-dépouillées (7) d'un second profilé (8) et qui pénètrent côté frontal dans une cavité (3) d'un premier profilé (4) et sont aptes à être calées sur des bandes saillantes intérieures (10, 10'), parallèles au tube et disposées entre lesdites mâchoires (6), du premier profilé (4), le premier profilé (4) présentant plus de deux bandes saillantes intérieures (10, 10') qui sont réparties régulièrement sur sa circonférence intérieure et diamétralement opposées et au niveau desquelles les mâchoires (6) sont aptes à être calées en étant appliquées longitudinalement, linéairement et/ou superficiellement, et les bandes saillantes intérieures (10, 10') pouvant être rapprochées à l'encontre de la contrainte d'écartement du premier profilé (4) qui agit dans le plan desdites bandes saillantes intérieures (10, 10') serrées, **caractérisé en ce que** les bandes saillantes intérieures (10, 10') serrées peuvent être rapprochées par complémentarité de forme par les mâchoires (6).

2. Assemblage en T selon la revendication 1, **caractérisé en ce que** les bandes saillantes intérieures (10, 10') et les mâchoires (6) peuvent être rapprochées par complémentarité de forme à l'aide de nervures d'accouplement (86) et de rainures d'accouplement (87) prévues longitudinalement par rapport aux bandes saillantes, et sur les mâchoires (6) sont formées les nervures d'accouplement (86) qui s'enclenchent dans les rainures d'accouplement (87) des bandes saillantes intérieures (10, 10').

3. Assemblage en T selon la revendication 2, **caractérisé en ce qu'**une rainure d'accouplement (87) d'une bande saillante intérieure (10) est formée entre deux nervures de bande saillante (88) qui s'étendent longitudinalement.

4. Assemblage en T selon la revendication 2 ou 3, **caractérisé en ce que** la bande saillante intérieure (10), dans la zone d'une rainure d'accouplement (87), est pratiquement aussi épaisse que dans une zone de base (89) située sur la circonférence intérieure (90) du premier profilé (4).

5. Assemblage en T selon l'une des revendications 1 à 4, **caractérisé en ce que** les bandes saillantes intérieures (10, 10') sont pourvues de chaque côté d'une rainure d'accouplement (87), et chaque mâchoire (6) est pourvue de chaque côté d'une nervure d'accouplement (86).

6. Assemblage en T selon l'une des revendications 1 à 5, **caractérisé en ce que** toutes les bandes saillantes intérieures (10, 10') d'un profilé (4) ont des nervures d'accouplement (86) et des rainures d'accouplement (87) de même taille.

7. Assemblage en T selon l'une des revendications 1 à 6, **caractérisé en ce que** le premier profilé (4) a une section transversale ronde, et les bandes saillantes intérieures (10), dans une zone de base (89) sur la circonférence intérieure (90) du premier profilé (4), présentent un tronçon d'écartement (91) qui va jusqu'à une rainure d'accouplement (87).

8. Assemblage en T selon l'une des revendications 1 à 6, **caractérisé en ce que** le premier profilé (4) a une section transversale carrée et présente, sur la circonférence intérieure (90') de chaque paroi de profilé (92), une seule bande saillante intérieure (10'), disposée au centre.

9. Assemblage en T selon la revendication 8, **caractérisé en ce que** la bande saillante intérieure (10') avec une rainure d'accouplement (87) fait suite à la circonférence intérieure (90') de la paroi de profilé (92) avec un renflement de renforcement (93).
